# EUROPEAN PATENT SPECIFICATION

(11) **EP 2 775 425 B1**
(45) Date of publication and mention of the grant of the patent: **04.10.2017**
(21) Application number: 13158204.1
(22) Date of filing: 07.03.2013
(51) Int. Cl.: G05B 19/042, G06K 17/00

(54) **A method for identifying an electrical equipment electronic device**
Verfahren zur Identifizierung einer elektronischen Vorrichtung einer elektrischen Ausrüstung
Procédé d'identification d'un dispositif électronique d'équipement électrique

(43) Date of publication of application: 10.09.2014
(73) Proprietor: General Electric Technology GmbH, 5400 Baden (CH)
(72) Inventor: Hambleton, Ian, Staffordshire, ST13 7PL (GB)
(74) Representative: Cleary, Fidelma

(56) References cited:
- WO-A1-2011/054029
- DE-A1-102007 038 810
- US-A1- 2009 218 404
- US-A1- 2010 259 549
- US-A1- 2011 183 712
- US-B2- 7 551 084

## Description

### BACKGROUND OF THE INVENTION

### 1. Field of the invention

This invention relates to a method for identifying an electrical equipment electronic device, for example an intelligent electronic device or IED. the electrical equipment is, for example, an electrical substation.

In the following we will consider such an intelligent electronic device in an electrical substation.

### 2. Description of the related art

The field of the invention is the field of industrial process control, specifically concerning the identification of electronic devices used for substation monitoring and control. Indeed it is hard to identify the capabilities and physical attributes of electrical substation intelligent electronic devices (IEDs), as it appears to be a "black box" of unknown content. When multiple intelligent electronic devices are present, it is important to know which intelligent electronic device implements a particular feature of an electrical scheme. For example, a single intelligent electronic device might implement a trip-circuit supervision, while an other intelligent electronic devices may not support this feature. An operator would need to identify this intelligent electronic device during commissioning, maintenance or repair. The ability to do this quickly and accurately reduces labour costs and the time exposed to the hazardous substation environment.

In prior art, most substation intelligent electronic devices have a manufacturer specific model number. This model number may be printed on the front panel, or obtainable from an electronic display or via an electrical communications interface. This model number must then be decoded to determine the intelligent electronic devices capabilities and physical attributes or looked up in a database that relates model numbers to equipment capabilities. Technical scheme drawings and documents may also indicate these capabilities. Some communications protocols, e.g. IEC16850, may also give partial capabilities information.

When a model number is obtained visually, the operator must either:
- decode it manually using a lookup table which is very time consuming, or
- accurately enter the multi-digit number into a portable computing device, containing a decode application, which is prone to error.

Then, to obtain the corresponding model via an electrical communications interface, a portable computer, e.g. laptop, is required, with the correct electrical connection lead. This is prone to electrical and connector type or pin-out compatibility issues. It is also not always convenient to connect external electronic devices to live equipment due to security restrictions or physical location of communication connection ports. Technical drawings and documentation may not always be available or may not been maintained correctly.

The purpose of the invention is to solve such a technical problem, in proposing a new method for identifying an electrical equipment electronic device.

Hereunder, we consider two prior art documents.

WO 2011/054029 describes a method to verify attendance at a selected location comprising the steps of:
- providing a barcode including for example information related to plant information, proximate said location, said barcode being for example displayed via an LCD display,
- enabling said barcode to be recorded with a portable device for example a smartphone, comprising a digital camera and having a software application enabling information to be extracted from the barcode and displayed,
- uptading the recorded information.

US 7 551 084 describes a system and a method for identifying automation components, particularly sensors, actuators and wiring components. Each component that is to be identified is equipped with an identification unit in which a code for identifying the automation component is stored and which outputs said identification code when being activated. Preferably, the identification unit comprises an electronic circuit while being provided with galvanically insulating (inductive, capacitive, radio-based) or galvanically conducting coupling to the component that is to be identified.

### SUMMARY OF THE INVENTION

The invention is more clearly defined in the following claim 1.

The invention concerns a method for identifying an electrical equipment electronic device comprising a front panel graphical display, in using a portable electronic apparatus comprising a camera and equipped with an application capable of reading an image via the camera, characterized in that it comprises the following steps:
- a machine readable image, which provides information concerning the electrical equipment electronic device, for example an inventory of the electronic device physical hardware and logical capabilities, is displayed on the graphical display,
- this machine readable image is read by the portable electronic apparatus application and captured by its camera to obtain image data,
- the image data are translated into a human readable format presented on a display of said portable electronic apparatus.

Advantageously the machine readable image comprises a one-dimensional barcode or a two-dimensional matrix barcode.

Advantageously the request to display the image on the graphical display is done by pressing at least one key of the electronic device.

Advantageously the request to display the image on the graphical display is done via a wireless signal sent from the portable electronic apparatus.

Advantageously the invention method, comprises the following steps:
- an operator presses at least a key on the electronic device front panel;
- the electronic device responds by displaying a machine readable image, representing an inventory of its physical hardware and logical capabilities, on its graphical display;
- the operator scans the image, using the portable electronic apparatus;
- the application extracts the data from the image and translate it into an human readable format presented on a display of said portable electronic apparatus;
- after a timeout period, the electronic device reverts back to its normal display.

Advantageously, in the second step, the electronic device is programmed to display the image for a fixed amount of time, before reverting to its normal display.

Advantageously the machine readable image is stored for use later or shared with other devices.

Advantageously, in the fourth step, the translation is performed:
- on the portable electronic apparatus via its own database or lookup table, or
- via a remote server connected over a wireless data network, or
- in sharing the image with a remote device that has a lookup table or database.

Advantageously the electrical equipment is an electrical substation, the electronic device is an intelligent electronic device, the portable electronic apparatus is a smartphone.

The machine readable image is translated into the required language of the portable electronic apparatus or remote server, removing the need to store multiple translations within the electronic device.

The invention method has notably the following key advantages:
The use of such a swift identification method reduces the substation operator's time spent within a safety critical area. Said method eliminates human error, compared to manually entered model number decoding. Moreover it removes electrical and connector compatibility issues, compared to model number decoding via a wired electrical communications interface. The removal of the need for a physical connection reduces the chances of electrical shock and overcomes any security or physical connection restrictions.

Due to high levels of electrical noise in a substation environment, using an intelligent electronic device with an optical interface gives better reliability, compared to wireless solutions. It ensures selection of the correct intelligent electronic device, especially where multiple intelligent electronic devices are present.

The use of an image generated by the intelligent electronic device is superior to an image sticker, fitted during production, as it eliminates the possibility of fitting the wrong sticker, or it falling off later or being damaged. The invention method eliminates the need to attach new stickers when upgrades are applied, as it generates the correct image for the current configuration when requested from the intelligent electronic device.

The invention method does rely on existing proven technologies used in a new innovative way. Indeed, image reading software running on a smartphone is a common and well-used feature for many applications.

### BRIEF DESCRIPTION OF THE DRAWINGS

- Figures 1 and 2 show a portable electronic apparatus reading a machine readable image, pursuant the invention method, figure 2 showing a part of the front panel of said portable electronic apparatus.
- Figure 3 is a flow chart showing the steps constituting the invention method.

### DESCRIPTION OF THE PREFERRED EMBODIMENTS

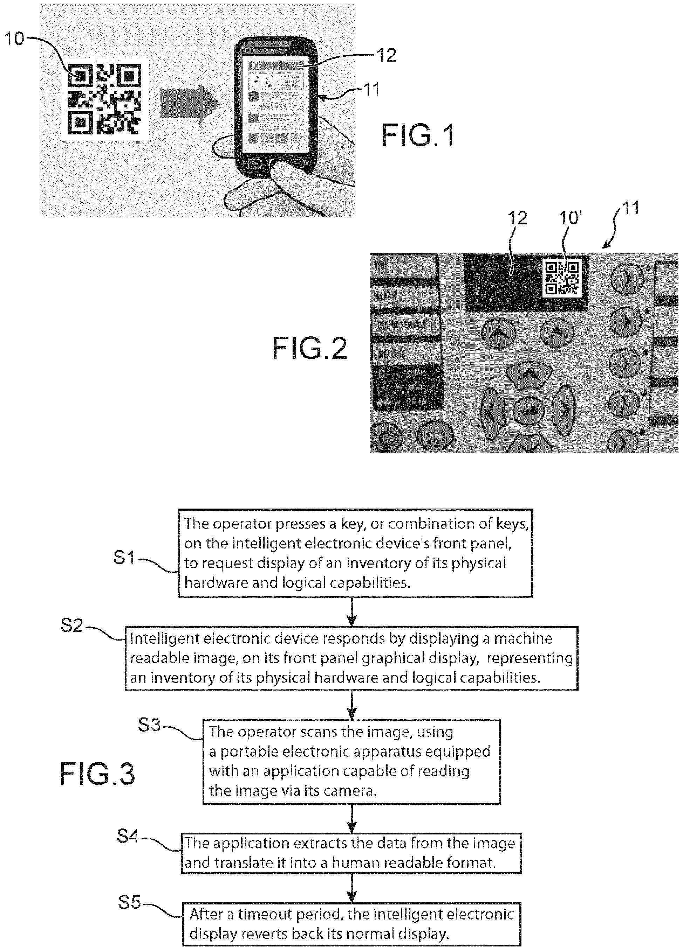

In the invention method, as shown on Figures 1 and 2, an electrical equipment electronic device, for example an electrical substation intelligent electronic device, displays a machine readable image 10 on its graphical display, when requested by an operator, for example via a front panel key. Said machine readable image provides an inventory of the devices physical hardware and logical capabilities of said electrical equipment electronic device. An application running on a portable electronic apparatus 11, such as a smartphone, reads this machine readable image, captured via its camera. Said application then extracts the image data and translates them into a human readable format. Figure 2 shows the display 12 situated on the front panel of the portable electronic apparatus 11, with the stored image 10' corresponding to the machine readable image 10.

A typical modern electrical substation intelligent electronic device contains an inventory of its physical attributes and logical capabilities. This inventory can notably include the amount of I/O present, fitment of specialized hardware devices (e.g. Ethernet card), or support of special software features. The intelligent electronic device translates this information into a machine readable image format and then presents it on its graphical display, when requested by the operator.

An existing format, dependent upon the amount of data represented and the graphical limitation of the intelligent electronic device, is utilized. For example, a two-dimensional matrix such as QR code (Quick Response (QR) Code is a trademark for a matrix barcode format) can be used.

The request to display this machine readable image is typically done by pressing a key, or a combination of keys, on an intelligent electronic device operator interface. However it could be triggered via a wireless signal, either optical or wireless radio, sent from a portable electronic apparatus, such as a smartphone.

The operator scans the image, using a portable electronic apparatus, such as a smartphone, equipped with an application capable of reading the image via a camera. The application extracts the data from the image and translates it into a human readable format. This translation can be performed on the portable electronic apparatus itself, or via a server connected over a wireless data network.

As shown on Figure 3, the invention method comprises the following steps :
- Step S1: The operator presses a key, or a combination of keys, on the intelligent electronic device's front panel, to request display of an inventory of its physical hardware and logical capabilities.
- Step S2: The intelligent electronic device responds by displaying a machine readable image on its front panel graphical display, representing an inventory of its physical hardware and logical capabilities. The intelligent electronic device can be programmed to display the image for a fixed amount of time, before reverting to its normal display.
- Step S3: The operator scans the image, using a portable electronic apparatus, such as a smartphone, equipped with an application capable of reading the image via its camera.
- Step S4: The application extracts the data from the image and translate it into a human readable format, which is presented on a display of said portable electronic apparatus. This translation can be performed on the portable electronic apparatus itself, or via a server connected to it over a wireless data network.
- Step S5: After a timeout period, the intelligent electronic device display reverts back to its normal display.

The application can be made available for popular operating systems e.g. Android, Apple iOS and Blackberry. The portable electronic apparatus does not require any hardware modifications or a physical connection to the intelligent electronic device. Alternatively the application can run on PC based operating systems, such as Microsoft Windows, Linux and Apple Mac-OS.

An intelligent electronic device is capable of translating an inventory of its physical attributes and logical capabilities into a machine readable image format. So it can present it on its graphical display, when requested by the operator. The utilized format is dependent upon the amount of data represented and the graphical limitation of the display. It can be:
- a one-dimensional barcode used for smaller amounts of data, where only a low-resolution display is available;
- a two-dimensional matrix barcode, such as QR code, used for larger amounts of data, where a higher resolution display is available;
- other machine readable formats which may be supported.

Presentation of the image on the display is requested via :
- either pressing a key, or combination of keys, on the intelligent electronic device user interface,
- or a wireless signal, e.g. wireless radio such as Bluetooth, sent from the portable electronic apparatus.

The machine readable image is scanned, using a portable electronic apparatus equipped with an application capable of reading the image via a camera. This image may also be stored for use later or shared with other devices. The portable electronic apparatus application extracts the data from the image and translates it into a human readable format, presented on a display. This translation can be performed:
- on the portable electronic apparatus, via its own database or lookup table, or
- via a remote server connected over a wireless data network, or
- sharing the image with a remote device that has the lookup table or database

The invention method may be extended to allow the extraction of other information from an intelligent electronic device, such as configuration parameters, alarms and events and for the verification of settings through stored checksums.

## Claims

1. A method for identifying an electrical substation electronic device comprising a front panel graphical display, used for monitoring and control of said substation during commissioning, maintenance or repair, in using a portable electronic apparatus (11) comprising a camera and equipped with an application capable of reading an image via the camera, **characterized in that** it comprises the following steps:
- a request from the portable electronic apparatus to display a machine readable image representing an inventory of the physical hardware and logical capabilities of the electronic device on the graphical display of the electronic device is done by an operator (S1); and, in response to said request, a machine readable image (10) is displayed on the graphical display of the electronic device (S2);
- the machine readable image is scanned using the camera of the portable electronic apparatus (S3); data from the scanned image being then extracted and translated into an human readable format presented on the display of said portable electronic apparatus (S4) so that the capabilities and physical attributes of the electrical substation electronic device are identified by the operator during commissioning, maintenance or repair of said substation;
- after a timeout period, the electronic device reverts back to its normal display (S5).

2. The method of claim 1, wherein the machine readable image (10) comprises a one-dimensional barcode or a two-dimensional matrix barcode.

3. The method of claim 1, wherein the request to display the image on the graphical display of the electronic device is done by pressing at least one key of the electronic device.

4. The method of claim 1, wherein the request to display the image on the graphical display of the electronic device is done via a wireless signal sent from the portable electronic apparatus.

5. The method of claim 1, wherein the electronic device is programmed to display the image for a fixed amount of time, before reverting to its normal display.

6. The method of claim 1, wherein the machine readable image is stored for use later or shared with other devices.

7. The method of claim 1, wherein, the translation is performed:
- on the portable electronic apparatus, via its own database or lookup table, or
- via a remote server connected over a wireless data network, or
- in sharing the image with a remote device that has a lookup table or database.

8. The method of any of the preceding claims, wherein the electronic device is an intelligent electronic device.

9. The method of any of the preceding claims, wherein the portable electronic apparatus is a smartphone.

## Patentansprüche

1. Verfahren zum Identifizieren einer elektronischen Vorrichtung eines elektrischen Umspannwerks, die eine grafische Frontplattenanzeige umfasst, welche zum Überwachen und zur Steuerung des Umspannwerks während der Inbetriebnahme, Wartung oder Reparatur bei der Verwendung einer tragbaren elektronischen Vorrichtung (11) verwendet wird, die eine Kamera umfasst und mit einer Anwendung ausgerüstet ist, die ein Bild über die Kamera lesen kann, **dadurch gekennzeichnet, dass** es die folgenden Schritte umfasst:
- eine Anforderung von der tragbaren elektronischen Vorrichtung, ein maschinenlesbares Bild, das einen Bestand an physischer Hardware und logischen Fähigkeiten der elektronischen Vorrichtung repräsentiert, auf der grafischen Anzeige der elektronischen Vorrichtung anzuzeigen, wird durch einen Operator (S1) realisiert; und als Reaktion auf die Anforderung wird ein maschinenlesbares Bild (10) auf der grafischen Anzeige der elektronischen Vorrichtung (S2) angezeigt;
- das maschinenlesbare Bild wird unter Verwendung der Kamera der tragbaren elektronischen Vorrichtung (S3) gescannt; Daten vom gescannten Bild werden dann extrahiert und in ein vom Menschen lesbares Format übertragen, das auf der Anzeige des tragbaren elektronischen Apparates (S4) präsentiert wird, sodass die Fähigkeiten und physischen Attribute der elektronischen Vorrichtung des elektrischen Umspannwerks durch den Operator während Inbetriebnahme, Wartung und Reparatur des Umspannwerks identifiziert werden;
- nach einer Wartezeit kehrt die elektronische Vorrichtung zur normalen Anzeige (S5) zurück.

2. Verfahren nach Anspruch 1, wobei das maschinenlesbare Bild (10) einen eindimensionalen Strichcode oder einen zweidimensionalen Matrix-Strichcode umfasst.

3. Verfahren nach Anspruch 1, wobei die Anforderung zum Anzeigen des Bildes auf dem grafischen Display der elektronischen Vorrichtung durch Drücken von mindestens einer Taste der elektronischen Vorrichtung erfolgt.

4. Verfahren nach Anspruch 1, wobei die Anforderung zum Anzeigen des Bildes auf dem grafischen Display der elektronischen Vorrichtung über ein drahtloses Signal erfolgt, das vom tragbaren elektronischen Apparat gesendet wird.

5. Verfahren nach Anspruch 1, wobei die elektronische Vorrichtung so programmiert ist, dass sie das Bild für eine feste Zeitdauer anzeigt, bevor sie zu ihrer normalen Anzeige zurückkehrt.

6. Verfahren nach Anspruch 1, wobei das maschinenlesbare Bild zum späteren Gebrauch gespeichert oder gemeinsam mit anderen Vorrichtungen genutzt wird.

7. Verfahren nach Anspruch 1, wobei die Übertragung ausgeführt wird:
- auf einer tragbaren elektronischen Vorrichtung, über ihre eigene Datenbank oder Verweistabelle oder
- über einen Fernserver, der über ein drahtloses Datennetz angeschlossen ist, oder
- bei der gemeinsamen Nutzung des Bildes mit einer entfernten Vorrichtung, die eine Verweistabelle oder Datenbank hat.

8. Verfahren nach einem der vorherigen Ansprüche, wobei die elektronische Vorrichtung eine intelligente elektronische Vorrichtung ist.

9. Verfahren nach einem der vorherigen Ansprüche, wobei der tragbare elektronische Apparat ein Smartphone ist.

## Revendications

1. Procédé d'identification d'un dispositif électronique de sous-station électrique comprenant un affichage graphique de tableau frontal utilisé pour surveiller et commander ladite sous-station au cours de la mise en service, de l'entretien ou de la réparation en utilisant un appareil électronique portable (11) comprenant une caméra et équipé d'une application capable de lire une image via la caméra, **caractérisé en ce qu'**il comprend les étapes suivantes :
- une demande émanant de l'appareil électronique portable pour afficher une image lisible sur machine représentant un inventaire du matériel physique et des capacités logiques du dispositif électronique sur l'affichage graphique du dispositif électronique est effectuée par un opérateur (S1) ; et, en réponse à ladite demande, une image lisible sur machine (10) est affichée sur l'affichage graphique du dispositif électronique (S2) ;
- l'image lisible sur machine est balayée en utilisant la caméra de l'appareil électronique portable (S3) ; les données émanant de l'image balayée étant ensuite extraites et traduites en un format lisible par l'homme présenté sur l'affichage dudit appareil électronique portable (S4) de sorte que les capacités et les attributs physiques du dispositif électronique de la sous-station électrique soient identifiés par l'opérateur au cours de la mise en service, de l'entretien ou de la réparation de ladite sous-station ;
- après un délai d'expiration, le dispositif électronique retourne à son affichage normal (S5).

2. Procédé selon la revendication 1, dans lequel l'image lisible sur machine (10) comprend un code à barres unidimensionnel ou un code à barres matriciel bidimensionnel.

3. Procédé selon la revendication 1, dans lequel la demande d'affichage de l'image sur l'affichage graphique du dispositif électronique se fait en pressant au moins une touche du dispositif électronique.

4. Procédé selon la revendication 1, dans lequel la demande d'affichage de l'image sur l'affichage graphique du dispositif électronique se fait via un signal sans fil envoyé par l'appareil électronique portable.

5. Procédé selon la revendication 1, dans lequel le dispositif électronique est programmé pour afficher l'image pendant une période de temps fixe avant de retourner à son affichage normal.

6. Procédé selon la revendication 1, dans lequel l'image lisible sur machine est stockée pour un usage ultérieur ou partagée avec d'autres dispositifs.

7. Procédé selon la revendication 1, dans lequel la traduction est effectuée :
- sur l'appareil électronique portable via sa propre base de données ou sa propre table de consultation ou
- via un service distant connecté via un réseau de données sans fil ou
- en partageant l'image avec un dispositif distant qui a une table de consultation ou une base de données.

8. Procédé selon l'une quelconque des revendications précédentes, dans lequel le dispositif électronique est un dispositif électronique intelligent.

9. Procédé selon l'une quelconque des revendications précédentes, dans lequel l'appareil électronique portable est un smartphone.
